# EUROPEAN PATENT SPECIFICATION

(11) **EP 3 433 527 B1**
(45) Date of publication and mention of the grant of the patent: **24.11.2021**
(21) Application number: 16711312.5
(22) Date of filing: 23.03.2016
(51) Int. Cl.: F16L 37/48, F15D 1/02

(54) **TAP CONNECTOR WITH FLOW STABILIZATION**
HAHNANSCHLUSS MIT DURCHFLUSSSTABILISIERUNG
RACCORD DE ROBINET À STABILISATION DE FLUX

(43) Date of publication of application: 30.01.2019
(73) Proprietor: Husqvarna AB, 561 82 Huskvarna (SE)
(72) Inventor: RENNER, Thomas, 89079 Ulm (DE)
(74) Representative: Schröer, Gernot H.
(86) International application number: PCT/EP2016/056423
(87) International publication number: WO 2017/162285

(56) References cited:
- AT-B- 413 875
- AT-B- 413 875
- DE-B1- 2 544 457
- DE-B1- 2 544 457
- GB-A- 797 769
- GB-A- 797 769
- GB-A- 1 167 680
- GB-A- 1 167 680
- US-A- 2 507 536
- US-A- 2 507 536
- US-A- 4 316 623
- US-A- 4 316 623

## Description

The present invention relates generally to the field of tap connectors. More specifically, the present document discloses a tap connector comprising means for reducing liquid turbulences.

### BACKGROUND OF THE INVENTION

Tap connectors for enabling a quick coupling of a hose with a water tap are known in prior art. For example, document GB 1,167,680 A discloses a hose coupling comprising an inner male member and an outer female member, the inner, male member being adapted to be inserted into the outer, female member. The outer female member comprises locking means in order to establish a detachable connection between the inner member and the outer member.

In order to couple a hose with a tap, the inner, male member is arranged at the outlet of the tap. In case that no hose is coupled with said inner, male member, e.g. for directly providing water from the tap into a watering can, the water does not form a uniform water jet but the water sprays out of the tap. Said spraying of water is mainly caused by a valve included in the tap.

### SUMMARY OF THE INVENTION

It is an objective of the embodiments of the present invention to provide a tap connector which stabilizes the liquid flow in order to avoid splashing of water in case that no hose is coupled with the tap connector. The objective is solved by the features of each of the independent claims 1 or 2. Preferred embodiments are given in the dependent claims. If not explicitly indicated otherwise, embodiments of the invention can be freely combined with each other.

The invention relates to a tap connector. The tap connector comprises a first coupling portion adapted to couple the tap connector with a tap. Said first coupling portion may comprise an annular shape and comprises a female thread for receiving a male thread of the tap. In addition, the tap connector comprises a second coupling portion adapted to receive a hose connector. Said second coupling portion comprise an outer contour in order to detachably arrange a hose connector at the tap connector. The second coupling portion further comprises a fluid channel for guiding a fluid received from the tap to a fluid outlet. The fluid channel comprises one or more ribs protruding from a wall of the fluid channel into the fluid channel. Said one or more ribs are integrally formed at the wall of the fluid channel.

Said tap connector is advantageous because, based on the ribs, a silencing of liquid turbulences within the fluid channel is achieved which leads to a uniform and focussed liquid stream at the outlet of the tap connector. By integrally forming said ribs at the fluid channel wall, a secure arrangement of ribs within the fluid channel is obtained.

The second coupling portion is integrally formed at said first coupling portion. Thereby, a fixed connection between the first and the second coupling portion is obtained.

Preferably, the longitudinal axes of the ribs are arranged in parallel to the longitudinal axis of the fluid channel. In other words, said ribs extend along the longitudinal axis of the fluid channel.

According to the invention as defined in claim 1, the length of the ribs is equal to the length of the second coupling portion.

In an embodiment according to the invention as defined in claim 2, the length of the ribs may be lower than the length of the second coupling portion.

According to embodiments, said one or more ribs are bar-like protrusions. Said ribs may comprise a planar shape. Thereby, liquid swirls occurring within the fluid channel can be suppressed.

According to embodiments, the tap connector comprises two or more ribs, said ribs being evenly distributed across the circumference of the fluid channel. By means of said distributed ribs, the fluid channel is at least partially segmented which leads to a silencing of liquid flowing through the fluid channel.

According to embodiments, the one or more ribs protrude radially from the wall of the fluid channel. In other words, the rib and a tangent at the origin of said rib confine a right angle. According to other embodiments, the one or more ribs protrude from the wall of the fluid channel such that the rib and a tangent at the origin of said rib confine an acute angle.

According to embodiments, the one or more ribs comprise a width smaller than the radius of the fluid channel. In other words said ribs are only arranged at the outer peripheral area of the fluid channel and the centre of the fluid channel is free from any ribs. Thereby only a partial segmenting of the fluid channel is obtained.

According to embodiments, the one or more ribs protrude radially from the wall of the fluid channel and are coupled in the centre of the fluid channel. For example, the ribs may comprise a width equal to the radius of the fluid channel and therefore meet in the centre of the fluid channel. Thereby an improved stability of the rib structure is obtained.

According to embodiments, said tap connector is integrally formed as a one-piece element. For example, the tap connector may be a single-piece plastic element and may be manufactured by injection molding.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: illustrates a sectional view of a tap connector according to prior art;
- Fig. 2: illustrates an opened water tap with a tap connector according to Fig. 1;
- Fig. 3: illustrates an example embodiment of a tap connector with multiple ribs in a sectional view;
- Fig. 4: illustrates an opened water tap with a tap connector according to Fig. 3;
- Fig. 5: illustrates a cross-sectional view through a tap connector according to a first example embodiment;
- Fig. 6: illustrates a cross-sectional view through a tap connector according to a second example embodiment; and
- Fig. 7: illustrates a cross-sectional view through a tap connector according to a third example embodiment.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

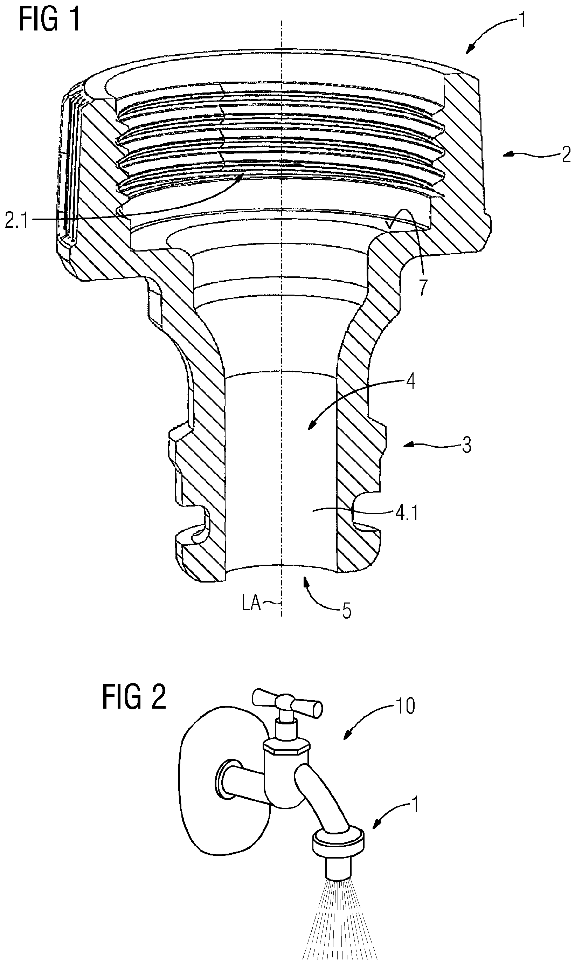

Fig. 1 illustrates a sectional view of a tap connector 1 according to prior art. The tap connector comprises a first and a second coupling portion 2, 3. The first coupling portion 2 is configured to detachably connect the tap connector 1 with an outlet of the tap. More in detail, the first coupling portion 2 may comprise an annular shape with a female thread 2.1 for enabling the tap connector 1 to be screwed on a corresponding male thread of the tap.

The second coupling portion 3 is adapted to be inserted in a corresponding hose connector in order to establish a detachable connection between the tap connector 1 and said hose connector. The second coupling portion 3 may comprise an essentially tubular shape. The contours at the outer coupling portion wall are adapted to enable said detachable connection between the tap connector 1 and said hose connector. The second coupling portion 3 confines a fluid channel 4 through which a fluid provided by the tap is guided to a fluid outlet 5 arranged at the free end of the second coupling portion 3.

The first coupling portion 2 is connected with the second coupling portion 3 via an annular portion 7, said annular portion providing a sealing surface in order to provide a fluid-tight connection between the tap and the tap connector. For example, said annular portion may form a contact surface for a sealing ring.

Fig. 2 shows a tap 10 with a tap connector 1 arranged at the outlet of the tap 10 (without any hose coupled with the tap connector). In the opened state of the tap 10, liquid is dispensed, wherein the liquid jet comprise a spray cone-like shape. In other words, the liquid jet is not focussed but the liquid is dispensed in a downwardly expanding fashion. Said unfocussed provision of liquid is mainly caused by turbulences arising within the tap 10 in the area of a tap valve. For example, the tap 10 may comprise a ball valve, said ball valve inducing turbulances which cause a spray cone-like liquid dispension. Such spray cone-like liquid dispension has detrimental effects because cans or buckets can not be filled without splashing of water.

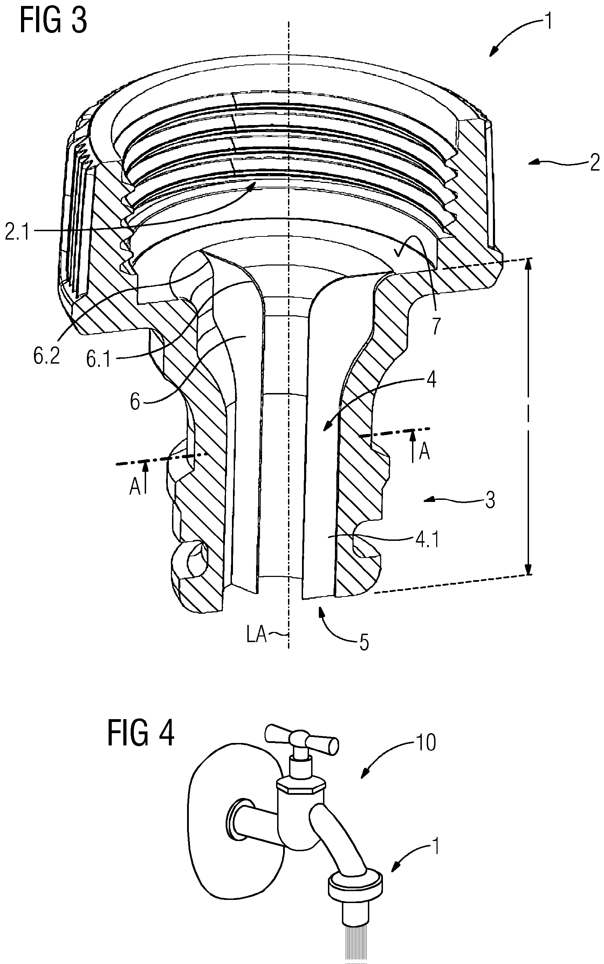

Fig. 3 shows a sectional view of an embodiment of a tap connector 1. The tap connector 1 of fig. 3 essentially comprises similar features as the tap connector of fig. 1. Therefore, in the following only additional features of the tap connector 1 of fig. 3 are explained. Apart from that, the afore-mentioned features of fig. 1 are also valid for the embodiment of fig. 3. The main difference of the tap connector 1 of fig. 3 with respect to the tap connector of fig. 1 is that multiple ribs 6 are arranged within the fluid channel 4. Said ribs 6 are adapted to silence the flow of the liquid in order to reduce splashing of liquid provided at the fluid outlet 5. In other words, a focussed liquid beam is provided at the liquid outlet 5 (cf. fig. 4).

More in detail, said ribs 4 protrude from the wall 4.1 of the fluid channel 4 thereby providing guidance for the liquid flowing through the fluid channel 4. In the present embodiment, the ribs 6 protrude radially from the wall 4.1 of the fluid channel 4, i.e. the rib 6 and a tangent through the origin of the rib 6 confines an angle of 90°.

Preferably, the ribs 6 may comprise a planar bar-like shape. The ribs 6 may extend in parallel to the longitudinal axis LA of the fluid channel 4. Thereby, the liquid flowing through the fluid channel 4 is forced to flow in the longitudinal direction and turbulences within the liquid stream are reduced by said ribs 6. According to embodiments, multiple ribs 6 may be equally distributed around the circumference of the fluid channel 4. Thereby, the fluid channel 4 is segmented in multiple fluid channel portions which further reduces liquid turbulences.

The ribs 6 may comprise a longitudinal shape and may extend through the whole length 1 of the second coupling portion 3, i.e. from the annular portion 7 to the fluid outlet 5. Alternatively, the ribs 6 may only extend along a certain section of the second coupling portion 3, i.e. the length of the ribs 6 may be smaller than the length 1 of the second coupling portion 3.

As shown in Fig. 3, the upper edges 6.1 of the ribs 6, i.e. the edges arranged in close proximity to the first coupling portion 2, may be rounded. Thereby, further generation of liquid turbulences can be avoided.

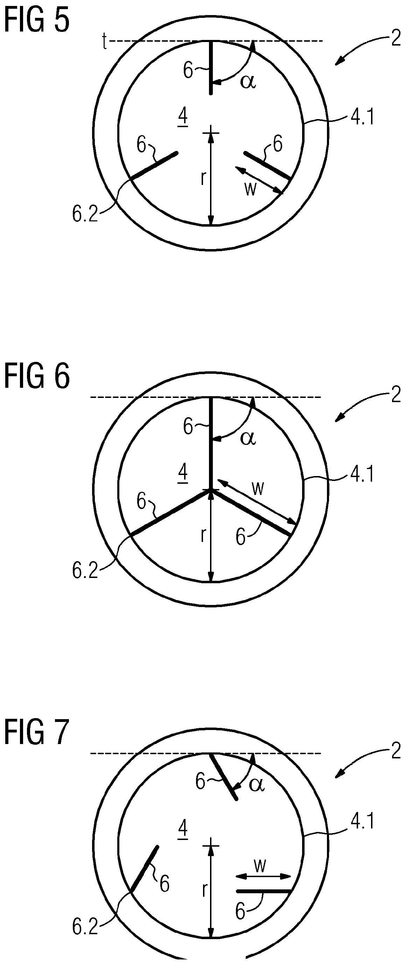

Fig. 5 to 7 show sectional views through different embodiments of a tap connector 1 along the cutting plane A-A of Fig. 3. Said embodiments comprise three equally distributed ribs 6. However, according to other embodiments, also more or less ribs 6 may be possible.

The embodiment of Fig. 5 essentially refers to the tap connector 1 shown in Fig. 3. The ribs 6 are extending radially towards the centre of the fluid channel 4. The width w of the ribs 6 is smaller than the radius r of the fluid channel. As such, the centre of the fluid channel 4 is free from any ribs 6. For example the width w of the ribs 6 may be in region between 0.5*r ≤ w < r.

The embodiment of Fig. 6 mainly corresponds to the embodiment of Fig. 5. Different to the embodiment of Fig. 5, the width w of the ribs 6 is equal to the radius r of the fluid channel 4. As such, the ribs 6 meet in the centre of the fluid channel 4 thereby forming a star-shaped rib arrangement within the fluid channel 4. Preferably, the ribs 6 are coupled in the centre of the fluid channel 4.

Fig. 7 shows a third embodiment which comprises slanted ribs 6. In other words, the ribs 6 do not protrude radially from the wall 4.1 of the fluid channel 4 but the ribs 6 and a tangent t at the origin 6.2 of the rib confine an acute angle α (α < 90°). According to embodiments, the angle α may be smaller than 60° (α < 60°). The width w of the ribs 6 may be smaller than the radius r of the fluid channel 4. For example, the width w of the ribs 6 may be in region 0.5*r ≤ w < r.

It should be noted that the description and drawings merely illustrate the principles of the proposed tap connector. Those skilled in the art will be able to implement various arrangements that, although not explicitly described or shown herein, embody the principles of the invention, as defined in the appended claims.

### List of reference numerals

- 1: tap connector
- 2: first coupling portion
- 2.1: female thread
- 3: second coupling portion
- 4: fluid channel
- 4.1: fluid channel wall
- 5: fluid outlet
- 6: rib
- 6.1: upper edge
- 6.2: origin
- 7: annular portion

- 10: tap

- α: angle
- 1: length
- LA: longitudinal axis
- r: radius
- t: tangent
- w: width

## Claims

1. Tap connector comprising a first coupling portion (2) adapted to couple the tap connector (1) with a tap (10) and a second coupling portion (3) adapted to receive a hose connector, wherein the second coupling portion (3) comprises a fluid channel (4) for guiding a fluid received from the tap (10) to a fluid outlet (5),
whereby the first coupling portion (2) comprises a female thread for receiving a male thread of the tap and the second coupling portion (3) comprising an outer contour to detachably arrange a hose connector at the tap connector, with the second coupling portion (3) being integrally formed at said first coupling portion (2),
and the first coupling portion (2) is connected with the second coupling portion (3) via a annular portion (7) that forms a contact surface for a sealing ring,
**characterized in that**
the fluid channel (4) comprises one or more ribs (6) protruding from a wall (4.1) of the fluid channel into the fluid channel (4) and the one or more ribs (6) are integrally formed at the wall (4.1) of the fluid channel (4),
whereby the ribs extend along the longitudinal axis of the fluid channel, wherein the ribs (6) comprise a longitudinal shape and extend through the whole length (1) of the second coupling portion (3) from the annular portion to the fluid outlet (5).

2. Tap connector comprising a first coupling portion (2) adapted to couple the tap connector (1) with a tap (10) and a second coupling portion (3) adapted to receive a hose connector, wherein the second coupling portion (3) comprises a fluid channel (4) for guiding a fluid received from the tap (10) to a fluid outlet (5),
whereby the first coupling portion (2) comprises a female thread for receiving a male thread of the tap and the second coupling portion (3) comprising an outer contour to detachably arrange a hose connector at the tap connector, with the second coupling portion (3) being integrally formed at said first coupling portion (2),
and the first coupling portion (2) is connected with the second coupling portion (3) via a annular portion (7) that forms a contact surface for a sealing ring,
**characterized in that**
the fluid channel (4) comprises one or more ribs (6) protruding from a wall (4.1) of the fluid channel into the fluid channel (4) and the one or more ribs (6) are integrally formed at the wall (4.1) of the fluid channel (4),
whereby the ribs (6) extend in parallel to the longitudinal axis (LA) of the fluid channel (4), wherein the longitudinal edges of the ribs (6) extend in parallel to the longitudinal axis (LA) of the fluid channel (4).

3. Tap connector according to claim 1 or 2, wherein said one or more ribs (6) are bar-like protrusions.

4. Tap connector according to anyone of the preceding claims, wherein one or more ribs (6) comprise a planar shape.

5. Tap connector according to anyone of the preceding claims, comprising two or more ribs (6), said ribs (6) being evenly distributed across the circumference of the fluid channel (4) .

6. Tap connector according to anyone of the preceding claims, wherein the one or more ribs (4) protrude radially from the wall (4.1) of the fluid channel (4).

7. Tap connector according to anyone of the preceding claims 1 to 5, wherein the one or more ribs (6) protrude from the wall (4.1) of the fluid channel (4) such that the rib (6) and a tangent (t) at the origin (6.2) of said rib (6) confine an acute angle (α).

8. Tap connector according to anyone of the preceding claims, wherein the one or more ribs (6) comprise a width (w) smaller than the radius (r) of the fluid channel (4).

9. Tap connector according to anyone of the preceding claims 1 to 7, wherein the one or more ribs (6) protrude radially from the wall (4.1) of the fluid channel (4) and are coupled in the centre of the fluid channel (4).

10. Tap connector according to anyone of the preceding claims, said tap connector (1) being integrally formed as a one-piece element.

## Patentansprüche

1. Hahnverbinder, umfassend einen ersten Kupplungsbereich (2), der dazu geeignet ist, den Hahnverbinder (1) mit einem Hahn (10) zu koppeln und einen zweiten Kupplungsbereich (3), der dazu geeignet ist, einen Schlauchverbinder aufzunehmen, wobei der zweite Kupplungsbereich (3) einen Strömungskanal (4) umfasst, um von dem Hahn (10) aufgenommene Flüssigkeit zu einem Flüssigkeitsauslass (5) zu leiten, wobei der erste Kupplungsbereich (2) ein Innengewinde umfasst, um ein Außengewinde des Hahns (10) aufzunehmen und wobei der zweite Kupplungsbereich (3) eine Außenkontur umfasst, um einen Schlauchverbinder lösbar an dem Hahnverbinder (1) anzuordnen, wobei der zweite Kupplungsbereich (3) integral an dem ersten Kupplungsbereich (2) geformt ist, und wobei der erste Kupplungsbereich (2) mit dem zweiten Kupplungsbereich (3) über einen ringförmigen Bereich (7) verbunden ist, der eine Kontaktfläche für einen Dichtungsring formt, **dadurch gekennzeichnet, dass**
der Strömungskanal (4) eine oder mehrere Rippen (6) umfasst, die von einer Wand (4.1) des Strömungskanals (4) in den Strömungskanal (4) hervorstehen und wobei die eine oder mehreren Rippen (6) integral mit der Wand (4.1) des Strömungskanals (4) geformt sind, wobei sich die Rippe(n) (6) entlang der Längsachse des Strömungskanals (4) erstrecken, wobei die Rippen (6) eine längliche Form aufweisen und sich durch die gesamte Länge (I) des zweiten Kupplungsbereichs (3) von dem ringförmigen Bereich bis zum Flüssigkeitsauslass (5) erstrecken.

2. Hahnverbinder, umfassend einen ersten Kupplungsbereich (2), der dazu geeignet ist, den Hahnverbinder (1) mit einem Hahn (10) zu koppeln und einen zweiten Kupplungsbereich (3), der dazu geeignet ist, einen Schlauchverbinder aufzunehmen, wobei der zweite Kupplungsbereich (3) einen Strömungskanal (4) umfasst, um von dem Hahn (10) aufgenommene Flüssigkeit zu einem Flüssigkeitsauslass (5) zu leiten, wobei der erste Kupplungsbereich (2) ein Innengewinde umfasst, um ein Außengewinde des Hahns (10) aufzunehmen und wobei der zweite Kupplungsbereich (3) eine Außenkontur umfasst, um einen Schlauchverbinder lösbar an dem Hahnverbinder (1) anzuordnen, wobei der zweite Kupplungsbereich (3) integral an dem ersten Kupplungsbereich (2) geformt ist, und wobei der erste Kupplungsbereich (2) mit dem zweiten Kupplungsbereich (3) über einen ringförmigen Bereich (7) verbunden ist, der eine Kontaktfläche für einen Dichtungsring formt, **dadurch gekennzeichnet, dass**
der Strömungskanal (4) eine oder mehrere Rippen (6) umfasst, die von einer Wand (4.1) des Strömungskanals (4) in den Strömungskanal (4) hervorstehen und wobei die eine oder mehreren Rippen (6) integral mit der Wand (4.1) des Strömungskanals (4) geformt sind, wobei sich die Rippen (6) parallel zu der Längsachse (LA) des Strömungskanals (4) erstrecken, und wobei sich die Längskanten der Rippen (6) parallel zu der Längsachse (LA) des Strömungskanals (4) erstrecken.

3. Hahnverbinder nach Anspruch 1 oder 2, wobei die eine oder mehrere Rippen (6) strebenartige Vorsprünge sind.

4. Hahnverbinder nach einem der vorhergehenden Ansprüche, wobei eine oder mehrere Rippen (6) eine ebene Form aufweisen.

5. Hahnverbinder nach einem der vorhergehenden Ansprüche, umfassend zwei oder mehr Rippen (6), wobei die besagten Rippen (6) gleichmäßig über den Umfang des Strömungskanals (4) verteilt sind.

6. Hahnverbinder nach einem der vorhergehenden Ansprüche, wobei die eine oder mehreren Rippen (4) von der Wand (4.1) des Strömungskanals (4) radial hervorstehen.

7. Hahnverbinder nach einem der vorhergehenden Ansprüche 1 bis 5, wobei die eine oder mehreren Rippen (6) von der Wand (4.1) des Strömungskanals (4) hervorstehen, so dass die Rippe (6) und eine Tangente (t) am Ursprung (6.2) der Rippe (6) einen spitzen Winkel (α) einschließen.

8. Hahnverbinder nach einem der vorhergehenden Ansprüche, wobei die eine oder mehreren Rippen (6) eine Breite (w) umfassen, die geringer ist als ein Radius (r) des Strömungskanals (4).

9. Hahnverbinder nach einem der vorhergehenden Ansprüche 1 bis 7, wobei die eine oder mehreren Rippen (6) von der Wand (4.1) des Strömungskanals (4) radial hervorstehen und im Zentrum des Strömungskanals (4) gekoppelt sind.

10. Hahnverbinder nach einem der vorhergehenden Ansprüche, wobei besagter Hahnverbinder (1) als einteiliges Element integral geformt ist.

## Revendications

1. Raccord de robinet comprenant une première portion de couplage (2) conçue pour coupler le raccord de robinet (1) à un robinet (10) et une deuxième portion de couplage (3) conçue pour recevoir un raccord de tuyau,
la deuxième portion de couplage (3) comprenant un canal pour fluide (4) pour guider un fluide reçu du robinet (10) vers une sortie de fluide (5),
la première portion de couplage (2) comprenant un filetage femelle pour recevoir un filetage mâle du robinet et la deuxième portion de couplage (3) comprenant un contour externe pour agencer de façon détachable un raccord de tuyau au niveau du raccord de robinet, la deuxième portion de couplage (3) étant formée d'un seul tenant au niveau de ladite première portion de couplage (2),
et la première portion de couplage (2) étant raccordée à la deuxième portion de couplage (3) par l'intermédiaire d'une portion annulaire (7) qui forme une surface de contact pour une bague d'étanchéité,
**caractérisé en ce que**
le canal pour fluide (4) comprend une ou plusieurs nervures (6) faisant saillie à partir d'une paroi (4.1) du canal pour fluide jusque dans le canal pour fluide (4) et les une ou plusieurs nervures (6) sont formées d'un seul tenant au niveau de la paroi (4.1) du canal pour fluide (4),
les nervures s'étendant le long de l'axe longitudinal du canal pour fluide, les nervures (6) comprenant un profil longitudinal et s'étendant à travers toute la longueur (1) de la deuxième portion de couplage (3) de la portion annulaire à la sortie de fluide (5).

2. Raccord de robinet comprenant une première portion de couplage (2) conçue pour coupler le raccord de robinet (1) à un robinet (10) et une deuxième portion de couplage (3) conçue pour recevoir un raccord de tuyau,
la deuxième portion de couplage (3) comprenant un canal pour fluide (4) pour guider un fluide reçu du robinet (10) vers une sortie de fluide (5),
la première portion de couplage (2) comprenant un filetage femelle pour recevoir un filetage mâle du robinet et la deuxième portion de couplage (3) comprenant un contour externe pour agencer de façon détachable un raccord de tuyau au niveau du raccord de robinet, la deuxième portion de couplage (3) étant formée d'un seul tenant au niveau de ladite première portion de couplage (2),
et la première portion de couplage (2) étant raccordée à la deuxième portion de couplage (3) par l'intermédiaire d'une portion annulaire (7) qui forme une surface de contact pour une bague d'étanchéité,
**caractérisé en ce que**
le canal pour fluide (4) comprend une ou plusieurs nervures (6) faisant saillie à partir d'une paroi (4.1) du canal pour fluide jusque dans le canal pour fluide (4) et les une ou plusieurs nervures (6) sont formées d'un seul tenant au niveau de la paroi (4.1) du canal pour fluide (4),
les nervures (6) s'étendant parallèlement à l'axe longitudinal (LA) du canal pour fluide (4), les bords longitudinaux des nervures (6) s'étendant parallèlement à l'axe longitudinal (LA) du canal pour fluide (4).

3. Raccord de robinet selon la revendication 1 ou la revendication 2, dans lequel lesdites une ou plusieurs nervures (6) sont des saillies en forme de barres.

4. Raccord de robinet selon l'une quelconque des revendications précédentes, dans lequel une ou plusieurs nervures (6) comprennent un profil planaire.

5. Raccord de robinet selon l'une quelconque des revendications précédentes, comprenant deux nervures ou plus (6), lesdites nervures (6) étant réparties uniformément sur la circonférence du canal pour fluide (4).

6. Raccord de robinet selon l'une quelconque des revendications précédentes, dans lequel les une ou plusieurs nervures (4) font saillie radialement à partir de la paroi (4.1) du canal pour fluide (4).

7. Raccord de robinet selon l'une quelconque des revendications précédentes 1 à 5, dans lequel les une ou plusieurs nervures (6) font saillie à partir de la paroi (4.1) du canal pour fluide (4) de telle sorte que la nervure (6) et une tangente (t) au niveau de l'origine (6.2) de ladite nervure (6) confinent un angle aigu (a).

8. Raccord de robinet selon l'une quelconque des revendications précédentes, dans lequel les unes ou plusieurs nervures (6) comprennent une largeur (w) plus petite que le rayon (r) du canal pour fluide (4).

9. Raccord de robinet selon l'une quelconque des revendications 1 à 7, dans lequel les une ou plusieurs nervures (6) font saillie radialement à partir de la paroi (4.1) du canal pour fluide (4) et sont couplées au centre du canal pour fluide (4).

10. Raccord de robinet selon l'une quelconque des revendications précédentes, ledit raccord de robinet (1) étant formé d'un seul tenant en tant qu'élément monobloc.
